(19) Europäisches Patentamt European Patent Office Office européen des brevets

(11) **EP 1 739 974 B1**

(12) **EUROPEAN PATENT SPECIFICATION**

(45) Date of publication and mention of the grant of the patent:
**11.08.2010 Bulletin 2010/32**

(51) Int Cl.:
**H04N 7/68** (2006.01)

(21) Application number: **06115980.2**

(22) Date of filing: **23.06.2006**

(54) **Error concealment method and apparatus**

Verfahren und Vorrichtung zur Fehlerverdeckung.

Procédé et dispositif pour masquage d'erreurs.

(84) Designated Contracting States:
**DE FR GB NL**

(30) Priority: **30.06.2005 US 694998 P**
        **06.09.2005 KR 2005082858**

(43) Date of publication of application:
**03.01.2007 Bulletin 2007/01**

(73) Proprietor: **SAMSUNG ELECTRONICS CO., LTD.**
**Suwon-si**
**Gyeonggi-do 442-742 (KR)**

(72) Inventor: **Baik, Hyun-ki**
**1208-2103 Mujigae Maeul Jugong**
**Seongnam-si**
**Gyeonggi-do (KR)**

(74) Representative: **Grootscholten, Johannes A.M.**
**Arnold & Siedsma**
**Sweelinckplein 1**
**2517 GK Den Haag (NL)**

(56) References cited:
**US-A- 5 727 088**

•  **SOO-CHANG PEI, YU-ZUONG CHOU: "Novel error concealment method with adaptive prediction to the abrupt and gradual scene change" IEEE TRANSACTIONS ON MULTIMEDIA, [Online] vol. 6, no. 1, 1 February 2004 (2004-02-01), pages 158-173, XP002401796 Retrieved from the Internet: URL:http:// ieeexplore.ieee.org/iel5/6046/2 8207/01261894.pdf? tp=&arnumber=1261894&isn umber=28207> [retrieved on 2006-10-05]**

•  **SOO-CHANG PEI ET AL: "Novel error concealment method with adaptive prediction of abrupt and gradual scene changes" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 3, 11 August 2002 (2002-08-11), pages 827-830, XP010613751 ISBN: 0-7695-1695-X**

•  **SOO-CHANG PEI; YU-ZUONG CHOU: "Scene-effect detection and insertion MPEG encoding scheme for video browsing and error concealment"[Online] vol. 7, no. 4, 1 August 2005 (2005-08-01), pages 606-614, XP002401797 Retrieved from the Internet: URL:http:// ieeexplore.ieee.org/iel5/6046/3 1485/01468146.pdf? tp=&arnumber=1468146&isn umber=31485> [retrieved on 2006-10-05]**

•  **JIN-HAU KUO ET AL: "A hybrid semantic scene-based error resilient system" COMMUNICATION SYSTTEMS, 2002. ICCS 2002. THE 8TH INTERNATIONAL CONFERENCE ON NOV. 25-28, 2002, PISCATAWAY, NJ, USA,IEEE, vol. 2, 25 November 2002 (2002-11-25), pages 973-976, XP010629366 ISBN: 0-7803-7510-6**

•  **KAISER S ET AL: "Comparison of error concealment techniques for an MPEG-2 video decoder in terrestrial TV-broadcasting<1>" May 1999 (1999-05), SIGNAL PROCESSING. IMAGE COMMUNICATION, ELSEVIER SCIENCE PUBLISHERS, AMSTERDAM, NL, PAGE(S) 655-676 , XP004165401 ISSN: 0923-5965 * page 662 - page 667 ***

**Description**

Methods and apparatuses consistent with the present invention relate to error concealment, and more particularly, to error concealment that can improve the picture quality of video data by concealing frame loss and reducing error propagation.

In line with increasing transmission of moving images over the radio network environments, developments in the radio network technologies have also been making rapid progress. Currently, extensive research and developments have been made in technologies for compressing such moving image frames. Frame compression technologies, such as H.263, H.263+, MPEG-1, MPEG-2, MPEG-4 have been established as international standards by the International Standards Organization. Since data produced using these compression technologies has high compression rates, it can be easily transmitted even in systems that are provided with channels having limited bandwidths.

However, in the case where the data compression rate is high, data being restored may be severely damaged due to an occurrence of error in the transmitted data. That is, packet loss frequently occurs due to a radio-wave interference caused by obstacles, and this causes a loss of video data to occur. In order to heighten the compression efficiency of the video data being transmitted, data of the previous frames are referred to. Accordingly, after the error occurrence due to the loss of video data, an error propagation phenomenon continues. In particular, the frame loss causes a serious error and error propagation phenomena in comparison to the slice or macroblock errors.

In order to overcome the above-described drawbacks, many attempts to encode moving image (hereinafter referred to as "video") data so that it has error resilience have been made in many fields. A frame error concealment technique has been proposed as one method for realizing this resilience. The frame error concealment is a method for reducing the influence of an error when video frames, in which the error exists, are received and decoded by a video decoder. This error concealment is different from error correction, which is a method of correcting incorrect data.

Among error concealment techniques, a temporal prediction error concealment conceals an error by using redundant information between successive frames according to video information, and spatial prediction error concealment conceals an error in the same frame, including lost information, by using spatial redundancy. Spatial prediction error concealment compensates for damaged macroblocks by using information of undamaged macroblocks in the present frame without using the temporal redundancy. For this, error concealment techniques which replace the lost block by a neighboring macroblock or which uses various interpolation methods have been proposed. Temporal prediction error concealment is a technique for referring to a frame existing in a temporarily different place in order to restore information of the lost macroblock in the present frame by using the temporal correlation between successive frames. Temporal prediction error concealment can be classified as a single-frame error concealment where one frame is referred to during the restoration of the video frame, and a multi-frame error concealment where two or more frames are referred to.

Several frame error concealment techniques have been proposed according to a method for obtaining a motion vector of a lost macroblock. One method uses a previously received frame, and another method uses two or more previously received frames. The method that uses a previously received frame may be further classified into three methods according to the method of using the previously received frame (hereinafter referred to as a "previous frame") as follows.

The first method uses a macroblock in the same position in a previous frame. The second method restores the lost motion vector by using an intermediate value or an average value of motion vectors neighboring the lost macroblock of the presently received frame. The third method uses a macroblock that is most similar to the present frame by estimating the neighboring pixel values of the lost macroblock from the previous frame.

The multi-frame error concealment technique restores the motion vector using the methods used for the single frame concealment technique. However, in order to find the lost macroblock, the multi-frame error concealment technique does not search for only one previous frame, but for at least two previous frames.

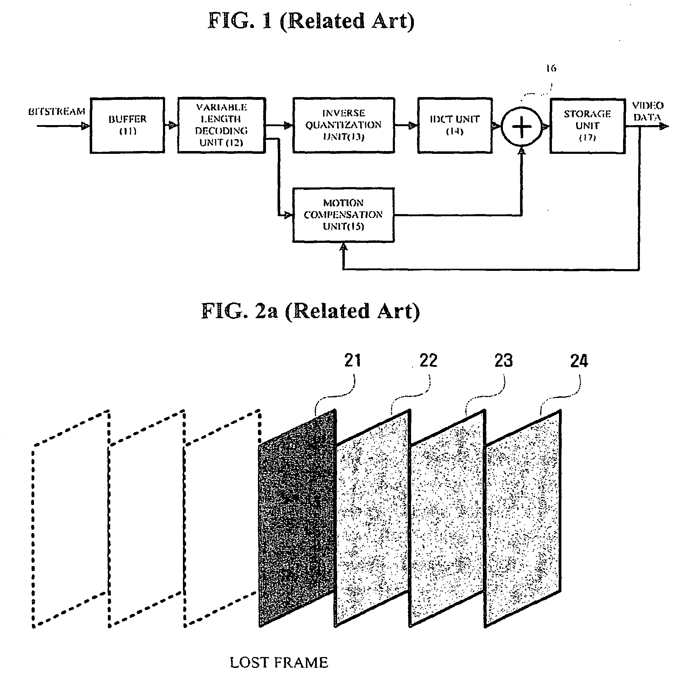

Prior to the explanation of the problems of a related art frame error concealment technology, the construction of a general video decoder will be briefly explained in the following. Generally, a video decoder restores the original video signal by performing a variable-length decoding and an inverse quantization of a compressed video bitstream. Figure 1 is a block diagram illustrating the construction of a related art video decoder.

Referring to Figure 1, a buffer stores an input bitstream, and a variable length decoding unit 12 performs a variable-length decoding of the bitstream stored in the buffer, and outputs video information generated as a result of the variable length decoding to an inverse quantization unit 13 and a motion compensation unit 15. The inverse quantization unit 13 receives quantization information output from the variable length decoding unit 12, and performs an inverse quantization of the variable-length-decoded data. An inverse discrete cosine transform (IDCT) unit 14 performs an IDCT of the inverse-quantized data output from the inverse quantization unit 13. A motion compensation unit 15 generates motion-compensated video data using the motion information and the video data output from the variable length decoding unit 12. An addition unit adds the video data motion-compensated by the motion compensation unit 15 and the video data inverse-DCT-transformed by the IDCT unit 14. A storage unit 17 stores the video data output from the addition unit 16.

As described above, the video decoder as illustrated in Figure 1 performs the variable length decoding by reading the video data according to the decoding capability of the video decoder after storing the input bitstream in the buffer 11. However, if an error occurs during the transmission of the video data and lost data, which cannot be variable-length-decoded, is included in the input video data, the lost error data accumulates to affect subsequent images.

Figure 2a is a view explaining the error propagation when a frame loss occurs in the related art video decoder. If an entire frame is lost, , as depicted by numeral 21 in Figure 2a, this affects macroblocks that refer to a forward frame causing serious picture quality deterioration. That is, the lost frame affects all the following frames 22, 23 and 24 causing the picture quality to deteriorate. In order to overcome the drawback due to the error occurrence as described above, a frame error concealment method has been proposed as one method for realizing error resilience. In the whole description of the present invention, the frame error concealment means a method for reducing the influence of an error in decoding subsequent data if the error occurs and an entire frame is not received in the decoder.

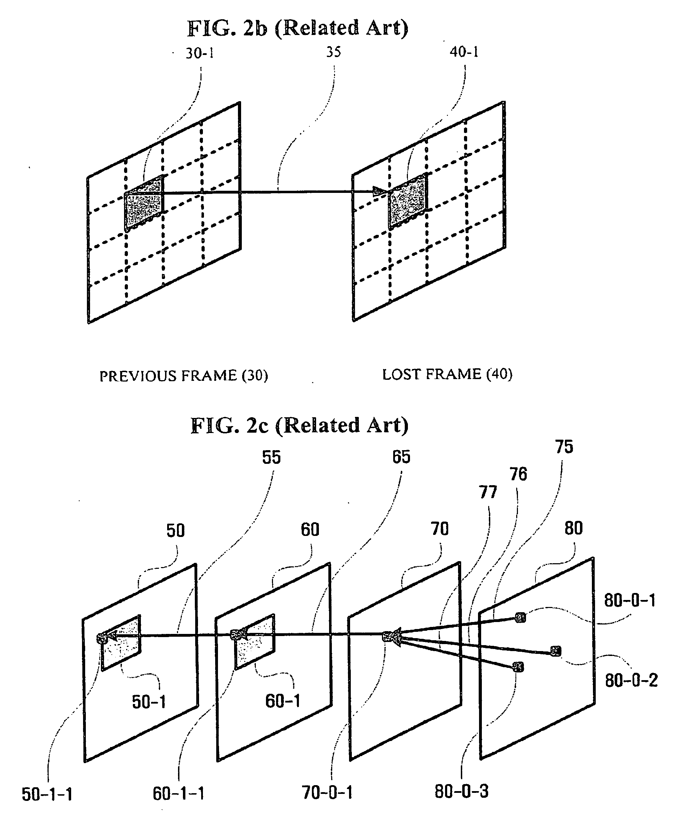

Figure 2b is a view explaining the method of referring to macroblocks of the previous frame in a related art frame-unit error concealment method. This method brings a macroblock 30-1 of the previous frame 30 that corresponds to a macroblock 40-1 of a lost frame 40 by applying a zero-point motion vector 35 to the previous frame 30 in order to restore the macroblock 40-1 of the lost frame 40.

However, the method as illustrated in Figure 2b refers to the data of the previous frame 30, and thus if a scene is changed or there is a great change between frames, a large prediction error occurs reducing the picture quality.

Figure 2c is a view explaining a method of predicting pixels of a lost frame through bidirectional extrapolation in a related art frame-unit error concealment method.

The method of Figure 2c performs a bidirectional concealment reference, i.e., a forward concealment reference and a backward concealment reference. The forward concealment reference operates as follows.

The forward concealment reference performs an extrapolation of motion vectors in the unit of a macroblock with respect to the previous frame so that the previous frame corresponds to the lost frame. In Figure 2c, the reference numeral 55 is a motion vector of a macroblock 60-1 of a frame 60. Extrapolation is performed with respect to a frame 70 after a motion vector 55, and a motion vector 65 that corresponds to a pixel 70-0-1 is obtained. Accordingly, a pixel 60-0-1 in the frame 60 is selected as a concealment reference point of the pixel 70-0-1 in the frame 70. Through this process, the pixel 70-0-1 may have more than zero concealment reference points with respect to the previous frame 60. If no concealment reference point exists, the pixel in the same position in the previous frame 60 is determined as the concealment reference point. By contrast, if plural concealment reference points exist, an average point of the concealment reference points is determined as the forward concealment reference point.

The backward concealment reference operates as follows.

Concealment reference points 80-0-1, 80-0-2 and 80-0-3, which correspond to the pixel 70-0-1 of the lost frame, are searched for using motion vectors 75, 76 and 77 of respective macroblocks of a backward frame 80 as shown in Figure 2c. The following process is the same as the forward concealment reference described above.

The average value of the forward and backward concealment values obtained through the above process becomes the concealment value of the pixel 70-0-1 of the lost frame 70. The lost frame 70 can be restored by performing the bidirectional reference for the respective pixels.

However, the method as illustrated in Figure 2c has the following problems.

First, its prediction accuracy is degraded due to the bidirectional reference during a scene change. If the scene is changed in the backward frame of the lost frame, there would be no correlation between the lost frame and the backward frame, while if the scene is changed in the forward frame of the lost frame, there would be no correlation between the lost frame and the forward frame. Since the method as illustrated in Figure 2c performs the bidirectional reference in the cases as described above, the prediction accuracy for the respective pixels of the lost frame is lowered.

Second, since the error is concealed using only one forward frame when the forward reference is performed, the probability of predicting accurate pixels is lowered when the concealment of an edge part of the image is performed or when an object in the image disappears and then appears again.

Third, since the prediction is performed by simply obtaining the average value with respect to the reference points that conceal the lost frame, inaccurate information of the reference points have the same weight value in performing the prediction which lowers the prediction accuracy.

SOO-CHANG PEI, Yu-ZUONG CHOU: "Novel error concealment method with adaptive prediction to the abrupt and gradual scene change" IEEE TRANSLATIONS ON MULTIMEDIA, [Online] vol. 6, no. 1, 1 February 2004 (2004-02-01), pages 158-173 discloses an error concealment method and apparatus according to the pre-characterising portions of claims 1 and 9 respectively.

US-A-5 727 088 discloses an error concealment method in a B-picture in which the choice of whether the forward or backward B-picture to be used is made adaptively, based upon whether a scene change is determined to have occurred.

KAISER S ET AL: "Comparison of error concealment techniques for an MPEG-2 video decoder in terrestrial TV-broadcasting<1>" May 1999 (1999-05), SIGNAL PROCESSING. IMAGE COMMUNICATOIN, ELSEVIER SCIENCE PUBLISHERS, AMSTERDAM, NL PAGE(S) 655-676 is a comparison of error concealment techniques for an MPEG-2 video decoder and includes a motion compensated temporal error concealment method.

According to the present invention there is provided an apparatus and method as set forth in the appended claims. Preferred features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary of the present invention may not overcome any of the problems described above.

The present invention provides an error concealment method and apparatus that can minimize the deterioration of picture quality due to a lost frame unit by extracting concealment reference points by determining a reference direction according to a scene change between frames, giving weight values to the extracted concealment reference points, and performing a restoration of the lost frame through the concealment of a pixel of the lost frame according to the weight values.

According to an aspect of the present invention, there is provided an error concealment method comprising: determining a reference direction, one of forward, backward and bidirectional, relative to a lost frame by determining whether a scene change between frames has occurred by analyzing video data of a previous frame that precedes the lost frame and video data of a following frame that follows the lost frame; extracting concealment reference points for a pixel of the lost frame by using at least one frame other than the lost frame according to the determined reference direction; obtaining a concealment pixel value of the pixel of the lost frame by giving weight values to the extracted concealment reference points; and restoring the lost frame by concealing the pixel using the concealment pixel value; characterised in that larger forward or backward weight values are given as absolute values of motion vectors become smaller, and smaller forward or backward weight values are given as the absolute values of the motion vectors become larger.

According to another aspect of the present invention, there is provided an error concealment method comprising: determining a reference direction, one of forward, backward and bidirectional, relative to a lost frame by determining whether a scene change between frames has occurred by analyzing video data of a previous frame that precedes the lost frame and video data of a following frame that follows the lost frame; extracting concealment reference points for a pixel of the lost frame by using at least one frame other than the lost frame according to the determined reference direction; obtaining a concealment pixel value of the pixel of the lost frame by giving weight values to the extracted concealment reference points; and restoring the lost frame by concealing the pixel using the concealment pixel value; wherein larger forward or backward weight values are given as absolute values of motion vectors become smaller, and smaller forward or backward weight values are given as the absolute values of the motion vectors become larger.

The above and other aspects of the present invention will become more apparent from the following detailed description of exemplary embodiments taken in conjunction with the accompanying drawings, in which:

Figure 1 is a block diagram illustrating the construction of a related art video decoder;

Figure 2a is a view explaining the error propagation when a frame loss occurs in the related art video decoder;

Figure 2b is a view explaining the method of referring to macroblocks of the previous frame in a related art frame-unit error concealment method;

Figure 2c is a view explaining a method of predicting pixels of a lost frame through bidirectional extrapolation in a related art frame-unit error concealment method;

Figure 3 is a block diagram illustrating the construction of a video decoder that includes an error concealment apparatus according to an exemplary embodiment of the present invention;

Figure 4 is a flowchart illustrating an error concealment method according to an exemplary embodiment of the present invention;

Figure 5 is a view explaining the determining of a reference direction of a lost frame in an error concealment method according to an exemplary embodiment of the present invention; and

Figure 6 is a view explaining extracting concealment reference points for a pixel constituting a lost frame in an error concealment method according to an exemplary embodiment of the present invention.

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but will be implemented in diverse forms. The matters defined in the description, such as the detailed construction and elements, are nothing but specific details provided to assist those of ordinary skill in the art in a comprehensive understanding of the invention, and the present invention is only defined within the scope of appended claims. In the whole description of the present invention, the same drawing reference numerals are used for the same elements across various figures.

Hereinafter, exemplary embodiments of the present invention will be described with reference to the accompanying drawings illustrating block diagrams and flowcharts for explaining error concealment method and apparatus according to the exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded into a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

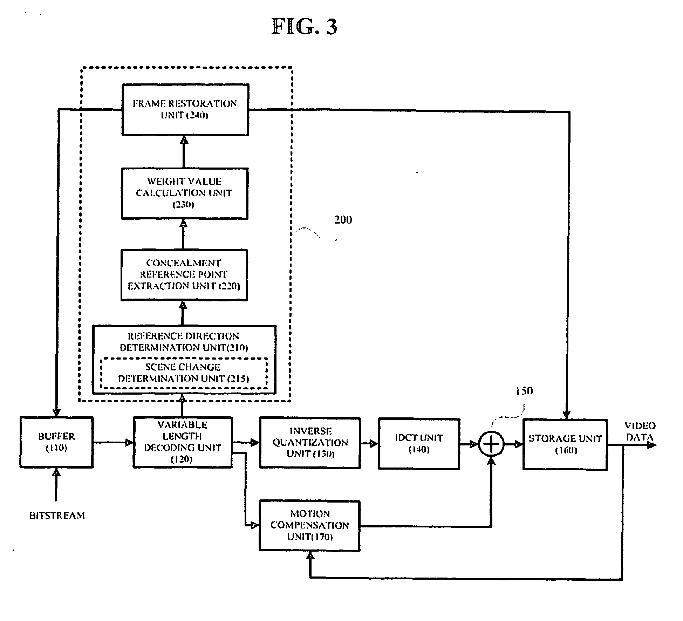

Figure 3 is a block diagram illustrating the construction of a video decoder that includes an error concealment apparatus according to an exemplary embodiment of the present invention. Referring to Figure 3, the video decoder includes an error concealment apparatus 200 according to an exemplary embodiment of the present invention, in addition to the related art construction including a buffer 110, a variable length decoding unit 120, an inverse quantization unit 130, an inverse discrete cosine transform (IDCT) unit 140, an addition unit 150, a storage unit 160, and a motion compensation unit 170. The error concealment apparatus 200 includes a reference direction determination unit 210, a concealment reference point extraction unit 220, a weight value calculation unit 230, and a frame restoration unit 240.

Similar to related art decoder, the buffer 110 stores an input bitstream, and the variable length decoding unit 120 performs a variable-length decoding of the bitstream stored in the buffer 110, and outputs video information generated as a result of the variable length decoding to the inverse quantization unit 130 and the motion compensation unit 170. The inverse quantization unit 130 receives quantization information output from the variable length decoding unit 120, and performs an inverse quantization of the variable-length-decoded data. The IDCT unit 140 performs an IDCT of the inverse-quantized data output from the inverse quantization unit 130. The motion compensation unit 170 generates motion-compensated video data using the motion information and the video data output from the variable length decoding unit 120. The addition unit 150 adds the video data motion-compensated by the motion compensation unit 170 and the video data inverse-DCT-transformed by the IDCT unit 140. The storage unit 160 stores the video data output from the addition unit 150.

If the video information, which is generated when the variable length decoding unit 120 performs the variable-length-decoding of the bitstream stored in the buffer 110, includes an abnormal error, the corresponding video information is output to the error concealment apparatus 200 in order to be subjected to an error concealment process.

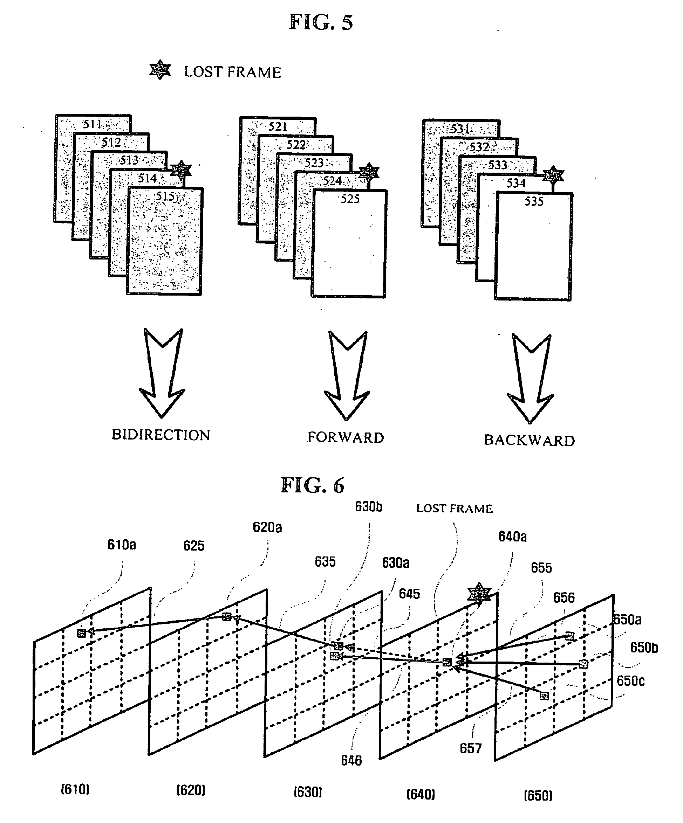

The reference direction determination unit 210 receives a lost frame output from the variable length decoding unit 120, and determines the reference direction of the lost frame. That is, the reference direction determination unit 210 determines the reference direction of the lost frame by determining whether a scene change occurs between frames on the basis of the lost frame. The reference direction determination unit 210 includes a scene change determination unit 215 which determines whether the scene change occurs between frames on the basis of the lost frame by analyzing video data of the previous frame preceding the lost frame and the frame following the lost frame. Figure 5 is a view explaining the determining of the reference direction of the lost frame in an error concealment method according to an exemplary embodiment of the present invention. In Figure 5, a process of determining the reference direction by determining the scene change between frames is illustrated. It is determined that the scene has been changed when the difference between the frame preceding the lost frame and the frame following the lost frame exceeds a predetermined value. In addition, in order to reduce an amount of calculation, the scene change may be determined using the difference between DC coefficients or a motion vector distribution.

Frames 511 to 515 illustrated in the left part of Figure 5 refer to a case where no scene change has occurred. In this case, a bidirectional reference for extracting concealment reference points from the previous frames 511 to 513 and the following frame 515 of the lost frame 514 is performed. That is, since it is determined by the scene change determination unit 215 that no scene change has occurred, it is determined to perform the bidirectional reference.

In the middle part of Figure 5, a case where a scene change has occurred in a frame 525 following a lost frame 524 among five frames 521 to 525 is illustrated. In this case, the lost frame 524 has no correlation with the frame 525, and a forward reference for extracting the concealment reference points from the previous frames 521 to 523 of the lost frame 524 is performed. That is, since it is determined by the scene change determination unit 215 that the scene change has occurred and the lost frame is the same as the previous frame that precedes the lost frame, it is determined to perform the forward reference.

In the right part of Figure 5, a case where a scene change has occurred in a lost frame 534 among five frames 531 to 535 is illustrated. In this case, the lost frame 534 has no correlation with the previous frame 533, and a backward reference for extracting the concealment reference points from the frame 535 that follows the lost frame 534 is performed. That is, since the lost frame is the same as the frame following the lost frame, it is determined to perform the backward reference.

The concealment reference point extraction unit 220 performs an extraction of concealment reference points for a pixel constituting the lost frame using at least one frame except for the lost frame. That is, if it is determined to perform the forward reference by the scene change determination unit 215, the concealment reference point extraction unit 220 extracts the concealment reference points using the plural previous frames. On the other hand, if it is determined to performed the backward reference by the scene change determination unit 215, the concealment reference point extraction unit 220 extracts the concealment reference points using one or more following frames. Also, if it is determined to perform the bidirectional reference by the scene change determination unit 215, the concealment reference point extraction unit 220 extracts the concealment reference points using the plural previous frames and one or more following frames.

In Figure 6, the above-described process is illustrated. Figure 6 is a view explaining extracting concealment reference points for a pixel constituting a lost frame in an error concealment method according to an exemplary embodiment of the present invention. In Figure 6, five frames 610 to 650 are sequentially arranged, and an error has occurred in the frame 640.

First, a process of extracting the forward concealment reference points will be explained. In order to obtain the forward concealment reference points, an average of motion vectors of the previous frames of the lost frame 640 should be obtained. A motion vector 645 directed from a pixel 640a of the lost frame 640 to a pixel 630a is found through an extrapolation of the pixel 640a, and an average of a motion vector 635 directed from the pixel 630a to a pixel 620a and a motion vector 625 directed from the pixel 620a, which the motion vector 635 refers to, to a pixel 610a is obtained. Accordingly, a pixel 630b, which the motion vector 646 directed from the pixel 640a to the pixel 630b refers to, is extracted as the concealment reference point. Through the above-described process, the forward concealment reference points for the pixel 640a of the lost frame 640 are extracted.

Second, a process of extracting the backward concealment reference points is as follows. Points that refer to the pixel 640a of the lost frame 640 are extracted as the concealment reference points by making respective points 650a, 650b and 650c of the following frame 650 of the lost frame 640 correspond to the lost frame 640 through motion vectors. In this case, since the respective pixels 650a, 650b and 650c have motion vectors 655, 656 and 657 that correspond to the pixel 640a of the lost frame, the pixels 650a, 650b and 650c that exist in the following frame 650 can be extracted as the following concealment reference points.

The weight value calculation unit 230 obtains a concealment pixel value of the lost frame by giving weight values to the extracted concealment reference points. Specifically, if it is determined to perform the forward reference by the scene change determination unit 215, the weight value calculation unit 230 obtains the concealment pixel value of the pixel constituting the lost frame by giving the forward weight values to the extracted concealment reference points, while if it is determined to perform the backward reference, the weight value calculation unit obtains the concealment pixel value of the pixel constituting the lost frame by giving the backward weight values to the extracted concealment reference points. Also, if it is determined to perform the bidirectional reference, the weight value calculation unit obtains the concealment pixel value by giving the forward weight values and the backward weight values and then giving directional weight values according to the reference directions to the extracted concealment reference points.

Here, higher forward or backward weight value is given as the absolute value of the motion vector becomes smaller, while lower forward or backward weight value is given as the absolute value of the motion vector becomes larger. This is because an error between pixels becomes larger as the magnitude of the motion vector becomes larger. The forward weight value is determined by Equation (1), and the backward weight value is determined by Equation (2).

$$w_{fi} = \frac{1}{1+|MV_i|} \times \frac{1}{\sum_{k=i}^{N}(\frac{1}{1+|MV_k|})}, [\sum_{i=1}^{N} w_{fi} = 1] \quad \text{.......} \quad (1)$$

$$w_{bi} = \frac{1}{1+|MV_i|} \times \frac{1}{\sum_{k=1}^{M}(\frac{1}{1+|MV_k|})}, [\sum_{i=1}^{M} w_{bi} = 1] \qquad \cdots\cdots \quad (2)$$

Here, $w_{fi}$ is a forward weight value that is multiplied by the pixel value of the i-th forward reference point among the pixels of the previous frames, and $w_{bi}$ is a backward weight value that is multiplied by the pixel value of the i-th backward reference point among the pixels of the following frames. $|MV_i|$ is the magnitude of the motion vector of the i-th reference point, $|MV_k|$ is the magnitude of the motion vector of the k-th reference point, N is the number of forward reference points, and M is the number of backward reference points. As can be seen from Equations (1) and (2), the weight values are in inverse proportion to $1+|MV_i|$. This is because the term $"\frac{1}{\sum_{k=1}^{N}(\frac{1}{1+|MV_k|})}"$ on the right side of Equation (1) is a coefficient for making the sum of the weight values become "1", and thus the sum of the weight values

becomes "1" ($\sum_{i=1}^{N} w_{bi} = 1$). The same explanation as described above can be applied to Equation (2). Consequently, both the forward weight value and the backward weight value are inversely proportional to the magnitude of the motion vector.

The directional weight values can be determined by Equation (3).

$$dw_f = \frac{ibn_b}{ibn_f + ibn_b},$$
$$dw_b = \frac{ibn_f}{ibn_f + ibn_b} \qquad \cdots\cdots \quad (3)$$

Here, $dw_f$ is the forward weight value, $dw_b$ is the backward weight value, $ibn_f$ is the number of intra macroblocks of the previous frame, and $ibn_b$ is the number of intra macroblocks of the following frame, respectively. Equation (3) uses the correlation between the lost frame and the previous frame and between the lost frame and the following frame, and is directly applied to the bidirectional reference. The forward weight value $dw_f$ becomes larger as the number of intra macroblocks $ibn_b$ existing in the following frame rather than the previous frame becomes larger, since the possibility of referring to the following frame becomes smaller and the possibility of referring to the forward previous frame becomes greater as the number of intra macroblocks existing in the following frame rather than the previous frame becomes larger. Since the backward weight value $dw_b$ has the same characteristic as the forward weight value, the detailed explanation thereof will be omitted.

After the weight values are calculated by the above-described equations, the concealment pixel value for the pixel constituting the lost frame is determined by Equation (4).

$$p(x, y) = dw_f \bullet \sum_{k=1}^{N} w_{fk} \cdot p(x_{fk}, y_{fk}) + dw_b \bullet \sum_{k=1}^{M} w_{bk} \cdot p(x_{bk}, y_{bk}) \quad \cdots\cdots \quad (4)$$

Here, $p(x, y)$ is the concealment pixel value for a pixel in the lost frame, $dw_f$ is the forward weight value, $dw_b$ is the backward weight value, $w_{fk} \cdot p(x_{fk}, y_{fk})$ is a value obtained by multiplying the pixel value of the k-th forward reference point by the forward weight value, and $W_{bk} \cdot p(x_{bk}, y_{bk})$ is a value obtained by multiplying the pixel value of the k-th backward reference point by the backward weight value, respectively. Equation (4) is useful when it is applied to the bidirectional reference. However, it can be applied to a case where either the forward reference or the backward reference is performed, in a manner that it gives the weight value of "1" to the corresponding reference direction and gives the weight value of "0" to the non-referred reference direction.

The frame restoration unit 240 restores the lost frame by performing the concealment using the concealment pixel value obtained by the above-described equations. The frame restored by the frame restoration unit 240 is sent to the buffer 110 or stored in the storage unit 160.

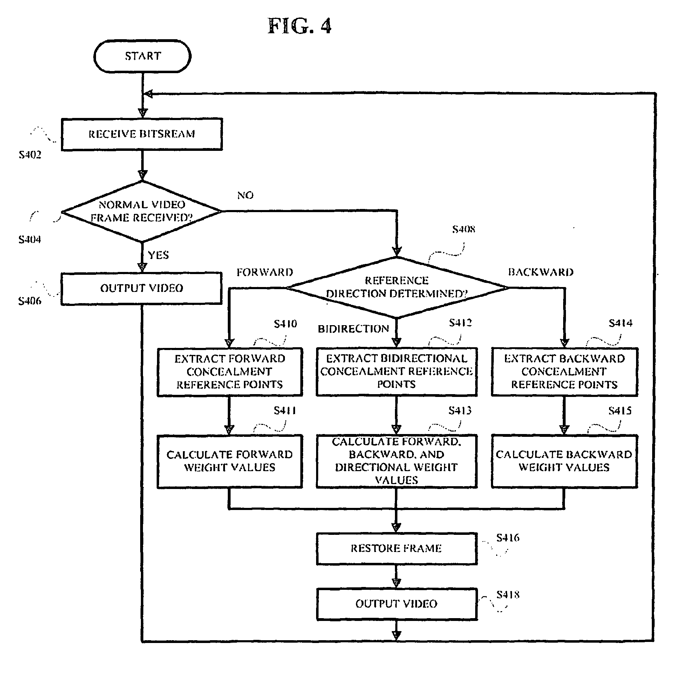

An error concealment method using the error concealment apparatus according to an exemplary embodiment of the present invention will be explained with reference to Figure 4 in the following.

If a bit stream is received in a video decoder according to an exemplary embodiment of the present invention (S402), it should be determined whether the received bit stream corresponds to normal video frames through several processes (S404). If the normal video frames are received without error, they are directly processed to output the corresponding video (S406). However, if an error occurs in the received video frame, an error concealment is performed by the error concealment apparatus 200 according to the exemplary embodiment of the present invention.

First, the reference direction of a lost frame is determined by determining whether a scene change occurs between frames on the basis of the lost frame (S408). The determination of whether the scene change occurs is performed by analyzing video data of the previous frame preceding the lost frame and the frame following the lost frame. If it is determined that the scene change has occurred, it is then determined whether the lost frame is the same as the previous frame or the following frame. If the lost frame is the same as the previous frame, a forward reference is performed, while if the lost frame is the same as the following frame, a backward reference is performed. If it is determined that the scene change has not occurred, a bidirectional reference is performed.

Then, a process of extracting concealment reference points for a pixel constituting the lost frame using at least one frame except for the lost frame is performed according to the determined reference direction.

That is, in the case of the forward reference, the concealment reference points are extracted using the plural previous frames (S410), while in the case of the backward reference, the concealment reference points are extracted using one or more following frames (S414). Also, in the case of the bidirectional reference, the concealment reference points are extracted using the plural previous frames and one or more following frames (S412).

Then, concealment pixel value of the pixel constituting the lost frame is obtained by giving weight values to the extracted concealment reference points.

Specifically, in the case of the forward reference, the concealment pixel value of the pixel constituting the lost frame is obtained by giving the forward weight values to the extracted concealment reference points (S411), and in the case of the backward reference, the concealment pixel value of the pixel constituting the lost frame is obtained by giving the backward weight values to the extracted concealment reference points (S415). Also, in the case of the bidirectional reference, the concealment pixel value of the pixel constituting the lost frame is obtained by giving the forward weight values and the backward weight values and then giving directional weight values according to the reference directions to the extracted concealment reference points (S413). Here, higher forward or backward weight value is given as the absolute value of the motion vector becomes smaller, while lower forward or backward weight value is given as the absolute value of the motion vector becomes larger. Since the corresponding equations have already been explained, the detailed explanation thereof will be omitted.

Last, the frame is restored by performing the concealment using the concealment pixel value S416, so that the corresponding video is output (S418).

A computer-readable recording medium recorded with a program for executing in a computer the method according to an exemplary embodiment of the present invention would be within the scope of the present invention.

As described above, according to the present invention, when a frame loss occurs in an appliance that receives/outputs compressed moving images such as a digital TV receiver, a portable phone and a multimedia terminal, an error concealment in the unit of a frame can be effectively performed, and the deterioration of picture quality due to an error propagation can be minimized.

In addition, according to the present invention, errors in the error concealment prediction, which may occur in a video having frequent scene changes, can be significantly reduced, and the accuracy of prediction can be increased using many prediction reference points obtained by performing a multi-reference of the previous frame.

In addition, according to the present invention, the reflection of respective prediction values can be effectively adjusted by giving weight values according to the correlation between frames to the concealment reference points.

Although a few preferred embodiments have been shown and described, it will be appreciated by those skilled in the art that various changes and modifications might be made without departing from the scope of the invention, as defined in the appended claims.

## Claims

**1.** An error concealment method comprising:

determining a reference direction, one of forward, backward and bidirectional, relative to a lost frame by determining whether a scene change between frames has occurred by analyzing video data of a previous frame that precedes the lost frame and video data of a following frame that follows the lost frame;

extracting concealment reference points for a pixel of the lost frame by using at least one frame other than the lost frame according to the determined reference direction;

obtaining a concealment pixel value of the pixel of the lost frame by giving weight values to the extracted concealment reference points; and

restoring the lost frame by concealing the pixel using the concealment pixel value; **characterised in that** larger forward or backward weight values are given as absolute values of motion vectors become smaller, and smaller forward or backward weight values are given as the absolute values of the motion vectors become larger, said motion vectors corresponding to said concealment reference points.

2. The error concealment method of claim 1, wherein the determining the reference direction of the lost frame further comprises:

determining that the reference direction is forward if it is determined that the scene change has occurred and the lost frame is the same as the previous frame;

determining that the reference direction is backward if it is determined that the scene change has occurred and the lost frame is the same as the following frame; and

determining that the reference direction is bidirectional if it is determined that the scene change has not occurred.

3. The error concealment method of claim 2, wherein the extracting concealment reference points comprises:

extracting the concealment reference points by using a plurality of previous frames if it is determined that the reference direction is forward;

extracting the concealment reference points by using one or more following frames if it is determined that the reference direction is forward; and

extracting the concealment reference points by using the plurality of previous frames and at least one following frame if it is determined that the reference direction is bidirectional.

4. The error concealment method of claim 3, wherein the obtaining a concealment pixel value comprises:

obtaining the concealment pixel value of the pixel of the lost frame by giving forward weight values to the extracted concealment reference points if it is determined that the reference direction is forward;

obtaining the concealment pixel value of the pixel of the lost frame by giving backward weight values to the extracted concealment reference points if it is determined that the reference direction is backward ; and

obtaining the concealment pixel value of the pixel of the lost frame by giving the forward weight values and the backward weight values, and then giving directional weight values according to the reference direction to the extracted concealment reference points if it is determined that the reference direction is bidirectional.

5. The error concealment method of claim 1, wherein the forward weight values are determined by:

$$w_{fi} = \frac{1}{1+|MV_i|} \times \frac{1}{\sum_{k=1}^{N} (\frac{1}{1+|MV_k|})} , [\sum_{i=1}^{N} w_{fi} = 1],$$

wherein $w_{fi}$ is a forward weight value that is multiplied by a pixel value of an i-th forward reference point, $|MV_i|$ is a magnitude of a motion vector of the i-th forward reference point, $|MV_k|$ is a magnitude of a motion vector of a k-th forward reference point, N is a number of forward reference points, and i and k are integers.

6. The error concealment method of claim 1, wherein the backward weight values are determined by:

$$w_{bi} = \frac{1}{1+|MV_i|} \times \frac{1}{\sum_{k=1}^{M}(\frac{1}{1+|MV_k|})}, [\sum_{i=1}^{M} w_{bi} = 1],$$

wherein $w_{bi}$ is a backward weight value that is multiplied by a pixel value of an i-th backward reference point, $|MV_i|$ is a magnitude of a motion vector of the i-th backward reference point, $|MV_k|$ is a magnitude of a motion vector of a k-th backward reference point, and M is a number of backward reference points.

7. The error concealment method of claim 4, wherein the directional weight values are determined by:

$$dw_f = \frac{ibn_b}{ibn_f + ibn_b},$$

$$dw_b = \frac{ibn_f}{ibn_f + ibn_b}$$

wherein $dw_f$ is a forward weight value, $dw_b$ is a backward weight value, $ibn_f$ is a number of intra-macroblocks of the previous frame, and $ibn_b$ is a number of intra-macroblocks of the following frame.

8. The error concealment method of claim 4, wherein the concealment pixel value of the pixel of the lost frame is determined by:

$$p(x,y) = dw_f \bullet \sum_{k=1}^{N} w_{fk} \cdot p(x_{fk}, y_{fk}) + dw_b \bullet \sum_{k=1}^{M} w_{bk} \cdot p(x_{bk}, y_{bk})$$

wherein $p(x,y)$ is the concealment pixel value for the pixel of the lost frame, $dw_f$ is a forward weight value, $dw_b$ is a backward weight value, $w_{jk} \cdot p(x_{fk}, y_{fk})$ is a value obtained by multiplying a pixel value of a k-th forward reference point by the forward weight value, N is a number of forward reference points, M is a number of backward reference points, $w_{bk} \cdot p(x_{bk}, y_{bk})$ is a value obtained by multiplying a pixel value of a k-th backward reference point by the backward weight value.

9. An error concealment apparatus comprising:

a reference direction determination unit (210) which determines a reference direction, one of forward, backward and bidirectional, relative to a lost frame by determining whether a scene change between frames has occurred wherein the reference direction determination unit (210) comprises a scene change determination unit that determines whether the scene change between the frames has occurred based on the lost frame by analyzing video data of the previous frame that precedes the lost frame and the frame that follows the lost frame;
a concealment reference point extraction unit (220) which extracts concealment reference points for a pixel of the lost frame by using at least one frame other than the lost frame according to the determined reference direction;
a weight value calculation unit (230) which obtains a concealment pixel value of the pixel of the lost frame by giving weight values to the extracted concealment reference points; and
a frame restoration unit (240) which restores the lost frame by concealing the pixel using the concealment pixel value;
**characterised in that** larger forward or backward weight values are given as absolute values of motion vectors become smaller, and smaller forward or backward weight values are given as the absolute values of the motion vectors become larger, said motion vectors corresponding to said concealment reference points.

**10.** The error concealment apparatus of claim 9, wherein the reference direction determination unit (210) determines that the reference direction is forward if the scene change determination unit determines that the scene change has occurred and the lost frame is the same as the previous frame, and determines that the reference direction is backward if the scene change determination unit determines that the scene change has occurred and the lost frame is the same as the following frame.

**11.** The error concealment apparatus of claim 10, wherein the reference direction determination unit (210) determines that the reference direction is bidirectional if the scene change determination unit determines that the scene change has not occurred.

**12.** The error concealment apparatus of claim 11, wherein the concealment reference point extraction unit (220) extracts the concealment reference points by using a plurality of previous frames if the scene change determination unit determines that the reference direction is forward; extracts the concealment reference points by using at least one following frame if the scene change determination unit determines that the reference direction is backward; and extracts the concealment reference points by using the plurality of previous frames and at least one following frame if the scene change determination unit determines that the reference direction is bidirectional.

**13.** The error concealment apparatus of claim 12, wherein the weight value calculation unit (230) obtains the concealment pixel value of the pixel of the lost frame by giving forward weight values to the extracted concealment reference points if the scene change determination unit determines that the reference direction is forward; obtains the concealment pixel value of the pixel of the lost frame by giving backward weight values to the extracted concealment reference points if the scene change determination unit determines that the reference direction is backward; and obtains the concealment pixel value of the pixel of the lost frame by giving the forward weight values and the backward weight values, and then giving directional weight values according to the reference direction to the extracted concealment reference points if the scene change determination unit determines that the reference direction is bidirectional.

**14.** The error concealment apparatus of claim 9, wherein the apparatus is configured whereby the forward weight values are determined by:

$$w_{fi} = \frac{1}{1+|MV_i|} \times \frac{1}{\sum_{k=1}^{N}(\frac{1}{1+|MV_k|})}, [\sum_{i=1}^{N} w_{fi} = 1],$$

wherein $w_{fi}$ is a forward weight value that is multiplied by a pixel value of an i-th forward reference point, $|MV_i|$ is a magnitude of a motion vector of the i-th forward reference point, $|MV_k|$ is a magnitude of a motion vector of a k-th forward reference point, and N is a number of forward reference points.

**15.** The error concealment apparatus of claim 9, wherein the backward weight values are determined by:

$$w_{bi} = \frac{1}{1+|MV_i|} \times \frac{1}{\sum_{k=1}^{M}(\frac{1}{1+|MV_k|})}, [\sum_{i=1}^{M} w_{bi} = 1]$$

wherein $w_{bi}$ is a backward weight value that is multiplied by a pixel value of an i-th backward reference point, $|MV_i|$ is a magnitude of a motion vector of the i-th backward reference point, $|MV_k|$ is a magnitude of a motion vector of a k-th backward reference point, and M is the number of backward reference points.

**16.** The error concealment apparatus of claim 13, wherein the directional weight values are determined by:

$$dw_f = \frac{ibn_b}{ibn_f + ibn_b},$$

$$dw_b = \frac{ibn_f}{ibn_f + ibn_b}$$

wherein $dw_f$ is a forward weight value, $dw_b$ is a backward weight value, $ibn_f$ is a number of intra-macroblocks of the previous frame, and $ibn_b$ is a number of intra-macroblocks of the following frame.

17. The error concealment apparatus of claim 13, wherein the concealment pixel value of the pixel of the lost frame is determined by:

$$p(x,y) = dw_f \bullet \sum_{k=1}^{N} w_{fk} \cdot p(x_{fk}, y_{fk}) + dw_b \bullet \sum_{k=1}^{M} w_{bk} \cdot p(x_{bk}, y_{bk}),$$

wherein $p(x, y)$ is the concealment pixel value for the pixel of the lost frame, $dw_f$ is a forward weight value, $dw_b$ is a backward weight value, $w_{fk} \cdot p(x_{fk}, y_{fk})$ is a value obtained by multiplying a pixel value of a k-th forward reference point by the forward weight value, N is a number of forward reference points, M is a number of backward reference points, and $w_{bk} \cdot p(x_{bk}, y_{bk})$ is a value obtained by multiplying a pixel value of a k-th backward reference point by the backward weight value.

18. A computer-readable recording medium having recorded thereon a program for implementing an error concealment method comprising:

determining a reference direction, one of forward, backward and bidirectional, of a lost frame by determining whether a scene change between frames has occurred based on the lost frame;
extracting concealment reference points for a pixel of the lost frame by using at least one frame other than the lost frame according to the determined reference direction;
obtaining a concealment pixel value of the pixel of the lost frame by giving weight values to the extracted concealment reference points; and
restoring the lost frame by concealing the pixel using the concealment pixel value; **characterised in that** larger forward or backward weight values are given as absolute values of motion vectors become smaller, and smaller forward or backward weight values are given as the absolute values of the motion vectors become larger, said motion vectors corresponding to said concealment reference points.

**Patentansprüche**

1. Fehlerverdeckungsverfahren, umfassend:

Bestimmen einer Referenzrichtung, entweder vorwärts oder rückwärts oder zweidirektional, in Bezug auf ein verlorenes Einzelbild (Frame) durch Bestimmen, ob eine Szenenveränderung zwischen Einzelbildern aufgetreten ist, durch Analysieren von Videodaten eines vorangehenden Einzelbilds, das dem verlorenen Einzelbild vorangeht, und von Videodaten eines nachfolgenden Einzelbilds, das dem verlorenen Einzelbild nachfolgt;
Extrahieren von Verdeckungsreferenzpunkten für ein Pixel des verlorenen Einzelbilds durch Verwenden zumindest eines Einzelbilds mit Ausnahme des verlorenen Einzelbilds in Übereinstimmung mit der bestimmten Referenzrichtung;
Erhalten eines Verdeckungspixelwerts des Pixels des verlorenen Einzelbilds durch Vergeben von Gewichtungswerten an die extrahierten Verdeckungsreferenzpunkte; und
Wiederherstellen des verlorenen Einzelbilds durch Verdecken des Pixels unter Verwendung des Verdeckungspixelwerts; **dadurch gekennzeichnet, dass** größere Vorwärts- oder Rückwärtsgewichtungswerte vergeben werden, während absolute Werte von Bewegungsvektoren kleiner werden, und kleinere Vorwärts- oder Rückwärtsgewichtungswerte vergeben werden, während die absoluten Werte der Bewegungsvektoren größer werden, wobei die Bewegungsvektoren den Verdeckungsreferenzpunkten entsprechen.

2. Fehlerverdeckungsverfahren nach Anspruch 1, wobei das Bestimmen der Referenzrichtung für das verlorene Einzelbild weiterhin umfasst:

Bestimmen, dass die Referenzrichtung vorwärts ist, falls bestimmt wird, dass die Szenenveränderung aufgetreten ist und das verlorene Einzelbild das gleiche ist wie das vorangehende Einzelbild;
Bestimmen, dass die Referenzrichtung rückwärts ist, falls bestimmt wird, dass die Szenenveränderung aufgetreten ist und das verlorene Einzelbild das gleiche ist wie das nachfolgende Einzelbild;
Bestimmen, dass die Referenzrichtung zweidirektional ist, falls bestimmt wird, dass die Szenenveränderung nicht aufgetreten ist.

3. Fehlerverdeckungsverfahren nach Anspruch 2, wobei das Extrahieren von Verdeckungsreferenzpunkten umfasst:

Extrahieren der Verdeckungsreferenzpunkte durch Verwenden einer Mehrzahl vorangehender Einzelbilder, falls bestimmt wird, dass die Referenzrichtung vorwärts ist;
Extrahieren der Verdeckungsreferenzpunkte durch Verwenden eines oder mehrerer nachfolgender Einzelbilder, falls bestimmt wird, dass die Referenzrichtung vorwärts ist; und
Extrahieren der Verdeckungsreferenzpunkte durch Verwenden der Mehrzahl vorangehender Einzelbilder und zumindest eines nachfolgenden Einzelbilds, falls bestimmt wird, dass die Referenzrichtung zweidirektional ist.

4. Fehlerverdeckungsverfahren nach Anspruch 3, wobei das Erhalten eines Verdeckungspixelwerts umfasst:

Erhalten des Verdeckungspixelwerts des Pixels des verlorenen Einzelbilds durch Vergeben von Vorwärtsgewichtungswerten an die extrahierten Verdeckungsreferenzpunkte, falls bestimmt wird, dass die Referenzrichtung vorwärts ist;
Erhalten des Verdeckungspixelwerts des Pixels des verlorenen Einzelbilds durch Vergeben von Rückwärtsgewichtungswerten an die extrahierten Verdeckungsreferenzpunkte, falls bestimmt wird, dass die Referenzrichtung rückwärts ist; und
Erhalten des Verdeckungspixelwerts des Pixels des verlorenen Einzelbilds durch Vergeben der Vorwärtsgewichtungswerte und der Rückwärtsgewichtungswerte, und dann durch Vergeben direktionaler Gewichtungswerte in Übereinstimmung mit der Referenzrichtung an die extrahierten Verdeckungsreferenzpunkte, falls bestimmt wird, dass die Referenzrichtung zweidirektional ist.

5. Fehlerverdeckungsverfahren nach Anspruch 1, wobei die Vorwärtsgewichtungswerte bestimmt werden durch:

$$w_{fi} = \frac{1}{1+|MV_i|} \times \frac{1}{\sum\limits_{k=1}^{N}(\frac{1}{1+|MV_k|})}, [\sum\limits_{i=1}^{N} w_{fi} = 1]$$

wobei $w_{fi}$ für einen Vorwärtsgewichtungswert steht, der multipliziert wird mit einem Pixelwert eines i-ten Vorwärtsreferenzpunkts, $|MV_i|$ für eine Größe eines Bewegungsvektors des i-ten Vorwärtsreferenzpunkts steht, $|MV_k|$ für eine Größe eines Bewegungsvektors eines k-ten Vorwärtsreferenzpunkts steht, N für eine Zahl von Vorwärtsreferenzpunkten steht, und i und k für ganze Zahlen stehen.

6. Fehlerverdeckungsverfahren nach Anspruch 1, wobei die Rückwärtsgewichtungswerte bestimmt werden durch:

$$w_{bi} = \frac{1}{1+|MV_i|} \times \frac{1}{\sum\limits_{k=1}^{M}\left(\dfrac{1}{1+|MV_k|}\right)}, \left[\sum\limits_{i=1}^{M} w_{bi} = 1\right]$$

wobei $w_{bi}$ für einen Rückwärtsgewichtungswert steht, der multipliziert wird mit einem Pixelwert eines i-ten Rückwärtsreferenzpunkts, $|MV_i|$ für eine Größe eines Bewegungsvektors des i-ten Rückwärtsreferenzpunkts steht, $|MV_k|$ für eine Größe eines Bewegungsvektors eines k-ten Rückwärtsreferenzpunkts steht, und M für eine Zahl von Rückwärtsreferenzpunkten steht.

7. Fehlerverdeckungsverfahren nach Anspruch 4, wobei die direktionalen Gewichtungswerte bestimmt werden durch:

$$dw_f = \frac{ibn_b}{ibn_f + ibn_b},$$

$$dw_b = \frac{ibn_f}{ibn_f + ibn_b}$$

wobei $dw_f$ für einen Vorwärtsgewichtungswert steht, $dw_b$ für einen Rückwärtsgewichtungswert steht, $ibn_f$ für eine Zahl von Intra-Makroblöcken des vorangehenden Einzelbilds steht, und $ibn_b$ für eine Zahl von Intra-Makroblöcken des nachfolgenden Einzelbilds steht.

8. Fehlerverdeckungsverfahren nach Anspruch 4, wobei der Verdeckungspixelwert des Pixels des verlorenen Einzelbilds bestimmt wird durch:

$$p(x,y) = dw_f \bullet \sum\limits_{k=1}^{N} w_{fk} \cdot p(x_{fk}, y_{fk}) + dw_b \bullet \sum\limits_{k=1}^{M} w_{bk} \cdot p(x_{bk}, y_{bk})$$

wobei $p(x,y)$ für den Verdeckungspixelwert für das Pixel des verlorenen Einzelbilds steht, wobei $dw_f$ für einen Vorwärtsgewichtungswert steht, $dw_b$ für einen Rückwärtsgewichtungswert steht, $W_{fk} \cdot p(x_{fk}, y_{fk})$ für einen Wert steht, der erhalten wird durch Multiplizieren eines Pixelwerts eines k-ten Vorwärtsreferenzpunkts mit dem Vorwärtsgewichtungswert, N für eine Zahl von Vorwärtsreferenzpunkten steht, M für eine Zahl von Rückwärtsreferenzpunkten steht, $W_{bk} \cdot p(x_{bk}, y_{bk})$ für einen Wert steht, der erhalten wird durch Multiplizieren eines Pixelwerts eines k-ten Rückwärtsreferenzpunkts mit dem Rückwärtsgewichtungswert.

9. Fehlerverdeckungsvorrichtung, umfassend:

eine Referenzrichtungsbestimmungseinheit (210), die eine Referenzrichtung, entweder vorwärts oder rückwärts oder zweidirektional, in Bezug auf ein verlorenes Einzelbild (Frame) bestimmt durch Bestimmen, ob eine Szenenveränderung zwischen Einzelbildern aufgetreten ist, wobei die Referenzrichtungsbestimmungseinheit (210) eine Szenenveränderungsbestimmungseinheit umfasst, die auf Grundlage des verlorenen Einzelbilds bestimmt, ob die Szenenveränderung zwischen den Einzelbildern aufgetreten ist, und zwar durch Analysieren von Videodaten des vorangehenden Einzelbilds, das dem verlorenen Einzelbild vorangeht, und des Einzelbilds, das dem verlorenen Einzelbild nachfolgt;
eine Verdeckungsreferenzpunkt-Extraktionseinheit (220), die Verdeckungsreferenzpunkte für ein Pixel des verlorenen Einzelbilds extrahiert durch Verwenden zumindest eines Einzelbilds mit Ausnahme des verlorenen Einzelbilds in Übereinstimmung mit der bestimmten Referenzrichtung;
eine Gewichtungswertberechnungseinheit (230), die einen Verdeckungspixelwert des Pixels des verlorenen Einzelbilds erhält durch Vergeben von Gewichtungswerten an die extrahierten Verdeckungsreferenzpunkte; und eine Einzelbildwiederherstellungseinheit (240), die das verlorene Einzelbild wiederherstellt durch Verdecken des Pixels unter Verwendung des Verdeckungspixelwerts;

**dadurch gekennzeichnet, dass** größere Vorwärts- oder Rückwärtsgewichtungswerte vergeben werden, während absolute Werte von Bewegungsvektoren kleiner werden, und kleinere Vorwärts- oder Rückwärtsgewichtungswerte vergeben werden, während die absoluten Werte der Bewegungsvektoren größer werden, wobei die Bewegungsvektoren den Verdeckungsreferenzpunkten entsprechen.

10. Fehlerverdeckungsvorrichtung nach Anspruch 9, wobei die Referenzrichtungsbestimmungseinheit (210) bestimmt, dass die Referenzrichtung vorwärts ist, falls die Szenenveränderungsbestimmungseinheit bestimmt, dass die Szenenveränderung aufgetreten ist und das verlorene Einzelbild das gleiche ist wie das vorangehende Einzelbild, und bestimmt, dass die Referenzrichtung rückwärts ist, falls die Szenenveränderungsbestimmungseinheit bestimmt, dass die Szenenveränderung aufgetreten ist und das verlorene Einzelbild das gleiche ist wie das nachfolgende Einzelbild.

11. Fehlerverdeckungsvorrichtung nach Anspruch 10, wobei die Referenzrichtungsbestimmungseinheit (210) bestimmt, dass die Referenzrichtung zweidirektional ist, falls die Szenenveränderungsbestimmungseinheit bestimmt, dass die Szenenveränderung nicht aufgetreten ist.

12. Fehlerverdeckungsvorrichtung nach Anspruch 11, wobei die Verdeckungsreferenzpunkt-Extraktionseinheit (220) die Verdeckungsreferenzpunkte extrahiert durch Verwenden einer Mehrzahl vorangehender Einzelbilder, falls die Szenenveränderungsbestimmungseinheit bestimmt, dass die Referenzrichtung vorwärts ist; die Verdeckungsreferenzpunkte extrahiert durch Verwenden zumindest eines nachfolgenden Einzelbilds, falls die Szenenveränderungsbestimmungseinheit bestimmt, dass die Referenzrichtung rückwärts ist; und die Verdeckungsreferenzpunkte extrahiert durch Verwenden der Mehrzahl vorangehender Einzelbilder und zumindest eines nachfolgenden Einzelbilds, falls die Szenenveränderungsbestimmungseinheit bestimmt, dass die Referenzrichtung zweidirektional ist.

13. Fehlerverdeckungsvorrichtung nach Anspruch 12, wobei die Gewichtungswertberechnungseinheit (230) den Verdeckungspixelwert des Pixels des verlorenen Einzelbilds erhält durch Vergeben von Vorwärtsgewichtungswerten an die extrahierten Verdeckungsreferenzpunkte, falls die Szenenveränderungsbestimmungseinheit bestimmt, dass die Referenzrichtung vorwärts ist; den Verdeckungspixelwert des Pixels des verlorenen Einzelbilds erhält durch Vergeben von Rückwärtsgewichtungswerten an die extrahierten Verdeckungsreferenzpunkte, falls die Szenenveränderungsbestimmungseinheit bestimmt, dass die Referenzrichtung rückwärts ist; und den Verdeckungspixelwert des Pixels des verlorenen Einzelbilds erhält durch Vergeben der Vorwärtsgewichtungswerte und der Rückwärtsgewichtungswerte, und dann durch Vergeben direktionaler Gewichtungswerte in Übereinstimmung mit der Referenzrichtung an die extrahierten Verdeckungsreferenzpunkte, falls die Szenenveränderungsbestimmungseinheit bestimmt, dass die Referenzrichtung zweidirektional ist.

14. Fehlerverdeckungsvorrichtung nach Anspruch 9, wobei die Vorrichtung konfiguriert ist, wodurch die Vorwärtsgewichtungswerte bestimmt werden durch:

$$w_{fi} = \frac{1}{1+|MV_i|} \times \frac{1}{\sum\limits_{k=1}^{N}\left(\dfrac{1}{1+|MV_k|}\right)}, \left[\sum_{i=1}^{N} w_{fi} = 1\right]$$

wobei $w_{fi}$ für einen Vorwärtsgewichtungswert steht, der multipliziert wird mit einem Pixelwert eines i-ten Vorwärtsreferenzpunkts, $|MV_i|$ für eine Größe eines Bewegungsvektors des i-ten Vorwärtsreferenzpunkts steht, $|MV_k|$ für eine Größe eines Bewegungsvektors eines k-ten Vorwärtsreferenzpunkts steht, und N für eine Zahl von Vorwärtsreferenzpunkten steht.

15. Fehlerverdeckungsvorrichtung nach Anspruch 9, wobei die Rückwärtsgewichtungswerte bestimmt werden durch:

$$w_{bi} = \frac{1}{1+|MV_i|} \times \frac{1}{\sum_{k=1}^{M}(\frac{1}{1+|MV_k|})}, [\sum_{i=1}^{M} w_{bi} = 1]$$

wobei $w_{bi}$ für einen Rückwärtsgewichtungswert steht, der multipliziert wird mit einem Pixelwert eines i-ten Rückwärtsreferenzpunkts, $|MV_i|$ für eine Größe eines Bewegungsvektors des i-ten Rückwärtsreferenzpunkts steht, $|MV_k|$ für eine Größe eines Bewegungsvektors eines k-ten Rückwärtsreferenzpunkts steht, und M für die Zahl von Rückwärtsreferenzpunkten steht.

16. Fehlerverdeckungsvorrichtung nach Anspruch 13, wobei die direktionalen Gewichtungswerte bestimmt werden durch:

$$dw_f = \frac{ibn_b}{ibn_f + ibn_b},$$

$$dw_b = \frac{ibn_f}{ibn_f + ibn_b}$$

wobei $dw_f$ für einen Vorwärtsgewichtungswert steht, $dw_b$ für einen Rückwärtsgewichtungswert steht, $ibn_f$ für eine Zahl von Intra-Makroblöcken des vorangehenden Einzelbilds steht, und $ibn_b$ für eine Zahl von Intra-Makroblöcken des nachfolgenden Einzelbilds steht.

17. Fehlerverdeckungsvorrichtung nach Anspruch 13, wobei der Verdeckungspixelwert des Pixels des verlorenen Einzelbilds bestimmt wird durch:

$$p(x,y) = dw_f \bullet \sum_{k=1}^{N} w_{fk} \cdot p(x_{fk}, y_{fk}) + dw_b \bullet \sum_{k=1}^{M} w_{bk} \cdot p(x_{bk}, y_{bk})$$

wobei $p(x,y)$ für den Verdeckungspixelwert für das Pixel des verlorenen Einzelbilds steht, $dw_f$ für einen Vorwärtsgewichtungswert steht, $dw_b$ für einen Rückwärtsgewichtungswert steht, $w_{fk} \cdot p(x_{fk}, y_{fk})$ für einen Wert steht, der erhalten wird durch Multiplizieren eines Pixelwerts eines k-ten Vorwärtsreferenzpunkts mit dem Vorwärtsgewichtungswert, N für eine Zahl von Vorwärtsreferenzpunkten steht, M für eine Zahl von Rückwärtsreferenzpunkten steht, und $w_{bk} \cdot p(x_{bk}, y_{bk})$ für einen Wert steht, der erhalten wird durch Multiplizieren eines Pixelwerts eines k-ten Rückwärtsreferenzpunkts mit dem Rückwärtsgewichtungswert.

18. Computerlesbares Aufzeichnungsmedium mit einem auf demselben aufgezeichneten Programm zum Implementieren eines Fehlerverdeckungsverfahrens, umfassend:

Bestimmen einer Referenzrichtung, entweder vorwärts oder rückwärts oder zweidirektional, für ein verlorenes Einzelbild durch Bestimmen, ob eine Szenenveränderung zwischen Einzelbildern aufgetreten ist, auf Grundlage des verlorenen Einzelbilds;
Extrahieren von Verdeckungsreferenzpunkten für ein Pixel des verlorenen Einzelbilds durch Verwenden zumindest eines Einzelbilds mit Ausnahme des verlorenen Einzelbilds in Übereinstimmung mit der bestimmten Referenzrichtung;
Erhalten eines Verdeckungspixelwerts des Pixels des verlorenen Einzelbilds durch Vergeben von Gewichtungswerten an die extrahierten Verdeckungsreferenzpunkte; und

16

Wiederherstellen des verlorenen Einzelbilds durch Verdecken des Pixels unter Verwendung des Verdeckungspixelwerts; **dadurch gekennzeichnet, dass** größere Vorwärts- oder Rückwärtsgewichtungswerte vergeben werden, während absolute Werte von Bewegungsvektoren kleiner werden, und kleinere Vorwärts- oder Rückwärtsgewichtungswerte vergeben werden, während die absoluten Werte der Bewegungsvektoren größer werden, wobei die Bewegungsvektoren den Verdeckungsreferenzpunkten entsprechen.

**Revendications**

1. Procédé de masquage d'erreur comprenant :

   la détermination d'une direction de référence, qu'elle soit vers l'avant, vers l'arrière ou bidirectionnelle, en rapport à une trame perdue en déterminant s'il s'est produit un changement de scène entre des trames en analysant les données vidéo d'une trame précédente qui précède la trame perdue et les données vidéo d'une trame suivante qui suit la trame perdue ;
   l'extraction de points de référence de masquage pour un pixel de la trame perdue en utilisant au moins une trame autre que la trame perdue conformément à la direction de référence déterminée ;
   l'obtention d'une valeur de pixel de masquage du pixel de la trame perdue résultant de l'attribution de valeurs de pondération aux points de référence de masquage extraits ; et
   la restauration de la trame perdue en masquant le pixel au moyen de la valeur de pixel de masquage ; **caractérisé en ce que** l'on attribue des valeurs de pondération vers l'avant ou vers l'arrière plus grandes selon que les valeurs absolues des vecteurs de déplacement diminuent, et l'on attribue des valeurs de pondération vers l'avant ou vers l'arrière plus petites selon que les valeurs absolues des vecteurs de déplacement augmentent, lesdits vecteurs de déplacement correspondant auxdits points de référence de masquage.

2. Procédé de masquage d'erreur selon la revendication 1, dans lequel la détermination de la direction de référence de la trame perdue comprend les opérations consistant à :

   déterminer que la direction de référence est vers l'avant s'il est déterminé qu'il s'est produit ledit changement de scène et que la trame perdue est la même que la trame précédente ;
   déterminer que la direction de référence est vers l'arrière s'il est déterminé qu'il s'est produit ledit changement de scène et que la trame perdue est la même que la trame suivante ; et
   déterminer que la direction de référence est bidirectionnelle s'il est déterminé que le changement de scène ne s'est pas produit.

3. Procédé de masquage d'erreur selon la revendication 2, dans lequel l'extraction des points de référence de masquage comprend :

   l'extraction des points de référence de masquage en utilisant une pluralité de trames précédentes s'il est déterminé que la direction de référence est vers l'avant ;
   l'extraction des points de référence de masquage en utilisant une ou plusieurs trames suivantes s'il est déterminé que la direction de référence est vers l'avant ; et
   l'extraction des points de référence de masquage en utilisant la pluralité de trames précédentes et au moins une trame suivante s'il est déterminé que la direction de référence est bidirectionnelle.

4. Procédé de masquage d'erreur selon la revendication 3, dans lequel l'obtention d'une valeur de pixel de masquage comprend :

   l'obtention de la valeur de pixel de masquage du pixel de la trame perdue en attribuant des valeurs de pondération vers l'avant aux points de référence de masquage extraits s'il est déterminé que la direction de référence est vers l'avant ;
   l'obtention de la valeur de pixel de masquage du pixel de la trame perdue en attribuant des valeurs de pondération vers l'arrière aux points de référence de masquage extraits s'il est déterminé que la direction de référence est vers l'arrière ; et
   l'obtention de la valeur de pixel de masquage du pixel de la trame perdue en attribuant les valeurs de pondération vers l'avant et les valeurs de pondération vers l'arrière, et en attribuant ensuite des valeurs de pondération directionnelles, conformément à la direction de référence, aux points de référence de masquage extraits s'il est déterminé que la direction de référence est bidirectionnelle.

**5.** Procédé de masquage d'erreur selon la revendication 1, dans lequel les valeurs de pondération vers l'avant sont déterminées par :

$$w_{fi} = \frac{1}{1 + |MV_i|} \times \frac{1}{\sum\limits_{k=1}^{N}(\frac{1}{1 + |MV_k|})}, [\sum\limits_{i=1}^{N} w_{fi} = 1]$$

où $w_{fi}$ représente une valeur de pondération vers l'avant qui est multipliée par une valeur de pixel d'un i-ième point de référence vers l'avant, $|MV_i|$ est la grandeur d'un vecteur de déplacement du i-ième point de référence vers l'avant, $|MV_k|$ est la grandeur d'un vecteur de déplacement d'un k-ième point de référence vers l'avant, N est un nombre de points de référence vers l'avant, et i et k sont des nombres entiers.

**6.** Procédé de masquage d'erreur selon la revendication 1, dans lequel les valeurs de pondération vers l'arrière sont déterminées par :

$$w_{bi} = \frac{1}{1 + |MV_i|} \times \frac{1}{\sum\limits_{k=1}^{M}(\frac{1}{1 + |MV_k|})}, [\sum\limits_{i=1}^{M} w_{bi} = 1]$$

où $w_{bi}$ représente une valeur de pondération vers l'arrière qui est multipliée par une valeur de pixel d'un i-ième point de référence vers l'arrière, $|MV_i|$ est la grandeur d'un vecteur de déplacement du i-ième point de référence vers l'arrière, $|MV_k|$ est la grandeur d'un vecteur de déplacement d'un k-ième point de référence vers l'arrière, et M est un nombre de points de référence vers l'arrière.

**7.** Procédé de masquage d'erreur selon la revendication 4, dans lequel les valeurs de pondération directionnelles sont déterminées par :

$$dw_f = \frac{ibn_b}{ibn_f + ibn_b},$$

$$dw_b = \frac{ibn_f}{ibn_f + ibn_b}$$

où $dw_f$ représente une valeur de pondération vers l'avant, $dw_b$ représente une valeur de pondération vers l'arrière, $ibn_f$ est un nombre de macroblocs intra de la trame précédente, et $ibn_b$ est un nombre de macroblocs intra de la trame suivante.

**8.** Procédé de masquage d'erreur selon la revendication 4, dans lequel la valeur de pixel de masquage du pixel de la trame perdue est déterminée par :

$$p(x, y) = dw_f \bullet \sum\limits_{k=1}^{N} w_{fk} \cdot p(x_{fk}, y_{fk}) + dw_b \bullet \sum\limits_{k=1}^{M} w_{bk} \cdot p(x_{bk}, y_{bk})$$

où $p(x,y)$ représente la valeur de pixel de masquage pour le pixel de la trame perdue, $dw_f$ représente une valeur de pondération vers l'avant, $dw_b$ représente une valeur de pondération vers l'arrière, $w_{fk} \cdot p(x_{fk}, y_{fk})$ représente une valeur obtenue en multipliant une valeur de pixel d'un k-ième point de référence vers l'avant par la valeur de pondération vers l'avant, N est un nombre de points de référence vers l'avant, M est un nombre de points de référence vers l'arrière, $w_{bk} \cdot p\ (x_{bk},\ y_{bk})$ représente une valeur obtenue en multipliant une valeur de pixel d'un k-ième point de référence vers l'arrière par la valeur de pondération vers l'arrière.

**9.** Appareil de masquage d'erreur comprenant :

une unité de détermination de la direction de référence (210) qui détermine une direction de référence, qu'elle soit vers l'avant, vers l'arrière ou bidirectionnelle, en rapport à une trame perdue en déterminant s'il s'est produit un changement de scène entre des trames, l'unité de détermination de la direction de référence (210) comprenant une unité de détermination de changement de scène qui détermine s'il s'est produit ledit changement de scène entre les trames en se fondant sur la trame perdue en analysant des données vidéo de la trame précédente, qui précède la trame perdue, et de la trame qui suit la trame perdue ;
une unité d'extraction de points de référence de masquage (220) qui extrait des points de référence de masquage pour un pixel de la trame perdue en utilisant au moins une trame autre que la trame perdue conformément à la direction de référence déterminée ;
une unité de calcul de valeur de pondération (230) qui obtient une valeur de pixel de masquage du pixel de la trame perdue résultant de l'attribution de valeurs de pondération aux points de référence de masquage extraits ; et
une unité de restauration de trames (240) qui restaure la trame perdue en masquant le pixel au moyen de la valeur de pixel de masquage ;
**caractérisé en ce que** l'on attribue des valeurs de pondération vers l'avant ou vers l'arrière plus grandes selon que les valeurs absolues des vecteurs de déplacement diminuent, et l'on attribue des valeurs de pondération vers l'avant ou vers l'arrière plus petites selon que les valeurs absolues des vecteurs de déplacement augmentent, lesdits vecteurs de déplacement correspondant auxdits points de référence de masquage.

**10.** Appareil de masquage d'erreur selon la revendication 9, dans lequel l'unité de détermination de la direction de référence (210) détermine que la direction de référence est vers l'avant si l'unité de détermination de changement de scène détermine qu'il s'est produit ledit changement de scène et que la trame perdue est la même que la trame précédente, et détermine que la direction de référence est vers l'arrière si l'unité de détermination de changement de scène détermine qu'il s'est produit ledit changement de scène et que la trame perdue est la même que la trame suivante.

**11.** Appareil de masquage d'erreur selon la revendication 10, dans lequel l'unité de détermination de la direction de référence (210) détermine que la direction de référence est bidirectionnelle si l'unité de détermination de changement de scène détermine que le changement de scène ne s'est pas produit.

**12.** Appareil de masquage d'erreur selon la revendication 11, dans lequel l'unité d'extraction de points de référence de masquage (220) extrait les points de référence de masquage en utilisant une pluralité de trames précédentes si l'unité de détermination de changement de scène détermine que la direction de référence est vers l'avant ; extrait les points de référence de masquage en utilisant au moins une trame suivante si l'unité de détermination de changement de scène détermine que la direction de référence est vers l'arrière ; et extrait les points de référence de masquage en utilisant la pluralité de trames précédentes et au moins une trame suivante si l'unité de détermination de changement de scène détermine que la direction de référence est bidirectionnelle.

**13.** Appareil de masquage d'erreur selon la revendication 12, dans lequel l'unité de calcul de valeur de pondération (230) obtient la valeur de pixel de masquage du pixel de la trame perdue en attribuant des valeurs de pondération vers l'avant aux points de référence de masquage extraits si l'unité de détermination de changement de scène détermine que la direction de référence est vers l'avant ; obtient la valeur de pixel de masquage du pixel de la trame perdue en attribuant des valeurs de pondération vers l'arrière aux points de référence de masquage extraits si l'unité de détermination de changement de scène détermine que la direction de référence est vers l'arrière ; et obtient la valeur de pixel de masquage du pixel de la trame perdue en attribuant les valeurs de pondération vers l'avant et les valeurs de pondération vers l'arrière, et en attribuant ensuite des valeurs de pondération directionnelles, conformément à la direction de référence, aux points de référence de masquage extraits si l'unité de détermination de changement de scène détermine que la direction de référence est bidirectionnelle.

**14.** Appareil de masquage d'erreur selon la revendication 9, dans lequel l'appareil a une configuration moyennant laquelle les valeurs de pondération vers l'avant sont déterminées par :

$$w_{fi} = \frac{1}{1+\left|MV_i\right|} \times \frac{1}{\sum\limits_{k=1}^{N}\left(\dfrac{1}{1+\left|MV_k\right|}\right)}, \left[\sum_{i=1}^{N} w_{fi} = 1\right]$$

où $w_{fi}$ représente une valeur de pondération vers l'avant qui est multipliée par une valeur de pixel d'un i-ième point de référence vers l'avant, $\left|MV_i\right|$ est la grandeur d'un vecteur de déplacement du i-ième point de référence vers l'avant, $\left|MV_k\right|$ est la grandeur d'un vecteur de déplacement d'un k-ième point de référence vers l'avant, et N est un nombre de points de référence vers l'avant.

**15.** Appareil de masquage d'erreur selon la revendication 9, dans lequel les valeurs de pondération vers l'arrière sont déterminées par :

$$w_{bi} = \frac{1}{1+\left|MV_i\right|} \times \frac{1}{\sum\limits_{k=1}^{M}\left(\dfrac{1}{1+\left|MV_k\right|}\right)}, \left[\sum_{i=1}^{M} w_{bi} = 1\right]$$

où $w_{bi}$ représente une valeur de pondération vers l'arrière qui est multipliée par une valeur de pixel d'un i-ième point de référence vers l'arrière, $\left|MV_i\right|$ est la grandeur d'un vecteur de déplacement du i-ième point de référence vers l'arrière, $\left|MV_k\right|$ est la grandeur d'un vecteur de déplacement d'un k-ième point de référence vers l'arrière, et M est le nombre de points de référence vers l'arrière.

**16.** Appareil de masquage d'erreur selon la revendication 13, dans lequel les valeurs de pondération directionnelles sont déterminées par :

$$dw_f = \frac{ibn_b}{ibn_f + ibn_b},$$

$$dw_b = \frac{ibn_f}{ibn_f + ibn_b}$$

où $dw_f$ représente une valeur de pondération vers l'avant, $dw_b$ représente une valeur de pondération vers l'arrière, $ibn_f$ est un nombre de macroblocs intra de la trame précédente, et $ibn_b$ est un nombre de macroblocs intra de la trame suivante.

**17.** Appareil de masquage d'erreur selon la revendication 13, dans lequel la valeur de pixel de masquage du pixel de la trame perdue est déterminée par :

$$p(x, y) = dw_f \bullet \sum_{k=1}^{N} w_{fk} \cdot p(x_{fk}, y_{fk}) + dw_b \bullet \sum_{k=1}^{M} w_{bk} \cdot p(x_{bk}, y_{bk})$$

où $p(x, y)$ représente la valeur de pixel de masquage pour le pixel de la trame perdue, $dw_f$ représente une valeur de pondération vers l'avant, $dw_b$ représente une valeur de pondération vers l'arrière, $w_{fk} \cdot p(x_{fk}, y_{fk})$ représente une valeur obtenue en multipliant une valeur de pixel d'un k-ième point de référence vers l'avant par la valeur de pondération vers l'avant, N est un nombre de points de référence vers l'avant, M est un nombre de points de référence vers l'arrière, et $w_{bk} \cdot p(x_{bk}, y_{bk})$ représente une valeur obtenue en multipliant une valeur de pixel d'un k-ième point de référence vers l'arrière par la valeur de pondération vers l'arrière.

**18.** Support d'enregistrement lisible par ordinateur présentant l'enregistrement d'un programme permettant de mettre en oeuvre un procédé de masquage d'erreur comprenant :

la détermination d'une direction de référence, qu'elle soit vers l'avant, vers l'arrière ou bidirectionnelle, en rapport à une trame perdue en déterminant s'il s'est produit un changement de scène entre des trames en se fondant sur la trame perdue ;

l'extraction de points de référence de masquage pour un pixel de la trame perdue en utilisant au moins une trame autre que la trame perdue conformément à la direction de référence déterminée ;

l'obtention d'une valeur de pixel de masquage du pixel de la trame perdue résultant de l'attribution de valeurs de pondération aux points de référence de masquage extraits ; et

la restauration de la trame perdue en masquant le pixel au moyen de la valeur de pixel de masquage ; **caractérisé en ce que** l'on attribue des valeurs de pondération vers l'avant ou vers l'arrière plus grandes selon que les valeurs absolues des vecteurs de déplacement diminuent, et l'on attribue des valeurs de pondération vers l'avant ou vers l'arrière plus petites selon que les valeurs absolues des vecteurs de déplacement augmentent, lesdits vecteurs de déplacement correspondant auxdits points de référence de masquage.

## FIG. 1 (Related Art)

## FIG. 2a (Related Art)

LOST FRAME

## FIG. 2b (Related Art)

30-1        35        40-1

PREVIOUS FRAME (30)       LOST FRAME (40)

## FIG. 2c (Related Art)

55     65     75

77   76

50    60    70    80

80-0-1

80-0-2

50-1    60-1

50-1-1    60-1-1    70-0-1    80-0-3

# FIG. 3

FRAME RESTORATION
UNIT (240)

WEIGHT VALUE
CALCULATION UNIT
(230)

CONCEALMENT
REFERENCE POINT
EXTRACTION UNIT (220)

REFERENCE DIRECTION
DETERMINATION UNIT(210)

SCENE CHANGE
DETERMINATION UNIT (215)

200

BUFFER
(110)

VARIABLE
LENGTH
DECODING UNIT
(120)

INVERSE
QUANTIZATION
UNIT (130)

IDCT UNIT
(140)

150

STORAGE UNIT
(160)

VIDEO
DATA

BITSTREAM

MOTION
COMPENSATION
UNIT(170)

# FIG. 4

```
                    ( START )
                        │
                        ▼
S402 ┄┄          ┌──────────────────┐
                 │ RECEIVE BITSREAM │◄──────────────────────────────────────┐
                 └──────────────────┘                                        │
                        │                                                    │
                        ▼                          NO                        │
S404 ┄┄          ╱─────────────╲ ───────────────────────┐                   │
                ╱ NORMAL VIDEO  ╲                        │                   │
                ╲ FRAME RECEIVED?╱                       │                   │
                 ╲─────────────╱                         │                   │
                        │ YES                            ▼        S408       │
                        ▼                FORWARD    ╱──────────────╲         │
S406 ┄┄          ┌──────────────┐  ◄───────────────╱  REFERENCE    ╲────────┐│
                 │ OUTPUT VIDEO │                  ╲ DIRECTION      ╱ BACKWARD│
                 └──────────────┘                   ╲ DETERMINED?  ╱         ││
                        │              S410           ╲──────────╱   S414    ││
                        │                BIDIRECTION       │        ┄┄       ││
                        ▼            ┌──────────────┐      │    ┌──────────┐ ││
                        │            │EXTRACT FORWARD│  S412│    │ EXTRACT  │ ││
                        │            │ CONCEALMENT   │  ┄┄  │    │BACKWARD  │ ││
                        │            │REFERENCE POINTS│     ▼    │CONCEALMENT│││
                        │            └──────────────┘ ┌────────┐│REFERENCE  │││
                        │                   │         │ EXTRACT ││ POINTS   │││
                        │              S411 │         │BIDIRECT.││          │││
                        │              ┄┄   ▼         │CONCEAL. │└──────────┘││
                        │            ┌──────────────┐ │REFERENCE│    │ S415  ││
                        │            │CALCULATE      │ │ POINTS  │    ┄┄     ││
                        │            │FORWARD WEIGHT │ └────────┘┌──────────┐││
                        │            │VALUES         │  S413 │   │CALCULATE ││
                        │            └──────────────┘  ┄┄   ▼   │BACKWARD  ││
                        │                   │      ┌──────────┐ │WEIGHT    ││
                        │                   │      │CALCULATE │ │VALUES    ││
                        │                   │      │FORWARD,  │ └──────────┘│
                        │                   │      │BACKWARD, │      │      │
                        │                   │      │AND DIRECT.│     │      │
                        │                   │      │WEIGHT VALUES│   │      │
                        │                   │      └──────────┘      │      │
                        │                   └──────────┬─────────────┘      │
                        │                              ▼     S416           │
                        │                        ┌──────────┐  ┄┄           │
                        │                        │RESTORE   │               │
                        │                        │FRAME     │               │
                        │                        └──────────┘               │
                        │                              │      S418          │
                        │                              ▼       ┄┄           │
                        │                        ┌──────────┐               │
                        │                        │OUTPUT    │               │
                        │                        │VIDEO     │               │
                        │                        └──────────┘               │
                        │                              │                    │
                        └──────────────────────────────┴────────────────────┘
```

# FIG. 5

✹ LOST FRAME

BIDIRECTION          FORWARD          BACKWARD

# FIG. 6

630b    LOST FRAME

620a

610a    625          635    630a

640a

655

656

645

650a

650b

650c

[610]    [620]    [630]    [640]    [650]

646    657

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5727088 A

**Non-patent literature cited in the description**

- **SOO-CHANG PEI ; Yu-ZUONG CHOU.** Novel error concealment method with adaptive prediction to the abrupt and gradual scene change. *IEEE TRANSLATIONS ON MULTIMEDIA,* 01 February 2004, vol. 6 (1), 158-173

- Comparison of error concealment techniques for an MPEG-2 video decoder in terrestrial TV-broadcasting<1>. **KAISER S et al.** SIGNAL PROCESSING. IMAGE COMMUNICATOIN. ELSEVIER SCIENCE PUBLISHERS, May 1999, 655-676